# EUROPEAN PATENT APPLICATION

(11) **EP 3 021 221 A1**
(43) Date of publication of application: **18.05.2016**
(21) Application number: 14306807.0
(22) Date of filing: 13.11.2014
(51) Int. Cl.: G06F 9/455, G06F 9/44

(54) **Method for optimizing the execution of a platform-independent method by means of a virtual machine of an integrated circuit card**

(71) Applicant: GEMALTO SA, 92190 Meudon (FR)
(72) Inventor: Chafer, Sylvain, 92190 Meudon (FR)
(74) Representative: Lotaut, Yacine Diaw

(57) **Abstract**

The present invention relates to an optimization method (MTH) for optimizing the execution of a first platform-independent method (F0) by a virtual machine (VM) of an integrated circuit card, wherein said integrated circuit card comprising a first non-volatile memory (MEM1), a second rewritable non-volatile memory (MEM2) and a unit processor (PR), said first platform-independent method (F0) being stored in said second rewritable non-volatile memory (MEM2), and wherein said optimization method (MTH) comprising:
- if there is a call to a specific second platform-independent method (F1) within said first platform-independent method (F0), said specific second platform-independent method (F1) comprising one specific parameter (P1) and being stored in the first non-volatile memory (MEM1), checking by means of said virtual machine (VM) according to said specific parameter P1 if there is a native function (F2) associated to said first platform-independent method (F0) stored in said second rewritable nonvolatile memory (MEM2);
- if there is a corresponding native function (F2):
- executing by means of said unit processor (PR) said native function (F2);
- exiting by means of said virtual machine (VM) directly from said first platform-independent method (F0) upon completion of said native function (F2).

## Description

### TECHNICAL FIELD

The present invention relates to an optimization method for optimizing the execution of a first platform-independent method by a virtual machine of an integrated circuit card.
The invention also relates to an associated integrated circuit card.

Such an optimization method may be used in a non-limitative example for payment applications.

### BACKGROUND OF THE INVENTION

In payment applications, the performance of payment transactions need to be optimal as there is a limit amount of time for a payment transaction to be executed according to payment standards, such as for example, banking EMV ("Europay Mastercard Visa") standards.

The time execution of an application is an important issue especially when using the integrated circuit card in contactless products.

When an integrated circuit card is used for a payment transaction, said integrated circuit card needs to execute different operations for the payment transaction. The source code related to the payment transaction comprises at least one first platform-independent method corresponding to the operations of the payment transaction to be performed. A first platform-independent method is written in a language which is a platform-independent code, which, after compilation, is interpreted and executed by a virtual machine of said integrated circuit card. The platform-independent code is independent from the unit processor of the integrated circuit card so that it may be executed in the same way on any integrated circuit card issued by any provider.

In order to improve the running time of some critical parts of the payment transaction, the related source code comprises parts which are coded in native code, said native code allowing the optimization of some operations within said payment transaction according to a platform's specificities. Native code is dependent of the unit processor of an integrated circuit card.

A problem of this prior art is that the source code associated to the payment transaction is not anymore interoperable as it comprises native code which is platform-dependent.

### SUMMARY OF THE INVENTION

It is an object of the invention to provide an optimization method for optimizing the execution of a first method by a virtual machine of an integrated circuit card, which permits to lessen the time of execution of said first method while keeping the interoperability of said first method.

To this end, there is provided an optimization method for optimizing the execution of a first platform-independent method by means of a virtual machine of an integrated circuit card, wherein said integrated circuit card comprising a first non-volatile memory, a second rewritable non-volatile memory and a unit processor, said first platform-independent method being stored in said second rewritable non-volatile memory, and wherein said optimization method comprising:
- if there is a call to a specific second platform-independent method within said first platform-independent method, said specific second platform-independent method comprising one specific parameter and being stored in the first non-volatile memory, checking by means of said virtual machine according to said specific parameter if there is a native function associated to said first platform-independent method stored in said second rewritable non-volatile memory;
- if there is a corresponding native function:
- executing by means of said unit processor said native function;
- exiting by means of said virtual machine directly from said first platform-independent method upon completion of said native function.

As we will see in further details, no native code is invoked directly in the source code, but only a reference to a native function is used via the specific parameter. Therefore, the same source code may be used on any platform.

According to non-limitative embodiments of the invention, the optimization method in accordance with the invention further comprises the following characteristics.

In a non-limitative embodiment, said first platform-independent method comprises at least one input parameter and said optimization method further comprises:
- if there is a corresponding native function:
- recovering by means of said virtual machine said at least one input parameter of said first platform-independent method for use as an input parameter for said native function.

In a non-limitative embodiment, said optimization method further comprises the definition of said specific second platform-independent method as a static method in a source code using said first platform-independent method, said static method having at least one input parameter.

In a non-limitative embodiment, said first platform-independent method returns first data and said native function returns the same first data.

In a non-limitative embodiment, said specific second platform-independent method comprises a second specific parameter for indicating the return type of said first return data.

In a non-limitative embodiment, said optimization method further comprises:
- copying by means of said virtual machine a value of the first data computed by said native function in a memory space allocated for said first data;
- exiting by means of said virtual machine directly from said first platform-independent method by returning said value upon completion of said native function.

In a non-limitative embodiment, a source code using said first platform-independent method comprises a plurality of static methods corresponding to said specific second platform-independent method according to the return type of said first data.

In a non-limitative embodiment, if there is no native function associated to said first platform-independent method, the optimization method further comprises:
- executing the specific second platform-independent method; and
- executing the operations of said first platform-independent method following the call to said specific second platform-independent method.

In a non-limitative embodiment, said first platform-independent method is in the form of bytecodes when executed by said virtual machine.

In a non-limitative embodiment, said virtual machine is a Java™ virtual machine.

In a non-limitative embodiment, said second non-volatile memory comprises at least one table, said at least one table comprising at least one specific parameter and an associated memory location in said second rewritable non-volatile memory where said native function corresponding to said first platform-independent method is stored.

In a non-limitative embodiment, said integrated circuit card is a smart card.

In a non-limitative embodiment, said second rewritable non-volatile memory is different from said first non-volatile memory.

In addition, there is provided an integrated circuit card comprising a virtual machine and a unit processor, a first non-volatile memory and a second rewritable non-volatile memory, said integrated circuit card being adapted to optimize the execution of a first platform-independent method by means of said virtual machine, said first platform-independent method being stored in said second rewritable non-volatile memory, said virtual machine being adapted to:
- if there is a call to a specific second platform-independent method within said first platform-independent method, said specific second platform-independent method comprising one specific parameter and being stored in the first non-volatile memory, check according to said specific parameter if there is a native function associated to said first platform-independent method stored in said second rewritable non-volatile memory;
- if there is a corresponding native function,
- said unit processor being adapted to:
- execute said native function;
- said virtual machine being further adapted to:
- exit directly from said first method upon completion of said native function.

In a non-limitative embodiment, said first non-volatile memory comprises a first package comprising said specific second platform-independent method, and said second rewritable non-volatile memory comprises a second package comprising said first platform-independent method.

In addition, there is provided a computer program product comprising a set of instructions, which when loaded into an integrated circuit card, causes the integrated circuit card to carry out the optimization method according to any one of the previous characteristics.

### BRIEF DESCRIPTION OF THE FIGURES

Some embodiments of methods and/or apparatus in accordance with embodiments of the present invention are now described, by way of example only, and with reference to the accompanying drawings, in which:
- Fig. 1 illustrates schematically a non-limitative embodiment of an integrated circuit card which carries out the optimization method of the invention;
- Fig.2 is a schematic organization chart of the optimization method according to a non-limitative embodiment of the invention;
- Fig.3 is a sequence diagram illustrating the optimization method of Fig. 2 comprising further non-limitative steps.

### DESCRIPTION OF EMBODIMENTS OF THE INVENTION

In the following description, well-known functions or constructions by the man skilled in the art are not described in detail since they would obscure the invention in unnecessary detail.

The present invention relates to an optimization method MTH for optimizing the execution of a first platform-independent method F0 by a virtual machine VM of an integrated circuit card ICC.

As we will see the optimization method provides the ability to optimize the performance of critical parts of a platform-independent application through native functions, while keeping the application interoperable, and loadable, even at post-issuance, on any platform, here on any integrated circuit card ICC which includes a virtual machine.

In the following description:
- source code refers to programming code that is a platform-independent code. The source code is interoperable as it may be run without being modified on any kind of devices such as an integrated circuit card ICC which supports a virtual machine VM. It is written in a portable language and run by a virtual machine. Once compiled, the source code generates virtual machine instructions;
- virtual machine instructions refers to programming code that is run through a virtual machine instead of a specific unit processor, such as the unit processor of the integrated circuit card ICC. Such programming code is a platform-independent code. Said virtual machine instructions are issued from the compilation of source code. Virtual machine instructions involved native functions when they need to use the resources of the platform, here of the integrated circuit card ICC;
- a native function refers to programming code which when compiled generates a native code;
- native code (also called machine language) refers to programming code that is configured to run on a specific unit processor. Native code will generally not run if used on a unit processor other than the one it was specifically written for. It is a platform-dependant code. In the example of the integrated circuit card ICC, a native code is linked to the unit processor of said integrated circuit card;
- a virtual machine VM is an interpreter which decodes and executes virtual machine instructions;
- a native method is a method which is declared as native in the source code and which invoked a native function. A native method is platform-dependent;
- an operation (also called functionality) refers to a functional process; and
- an instruction refers to a code instruction.

In non-limitative examples:
- the virtual machine is a JavaTM virtual machine JVM and the portable language is the JavaTM language dedicated to an integrated circuit card ICC card, which is called JavaCardTM.
- the source code is written in JavaCardTM. The virtual machine instructions are of the form of bytecodes. They include one or a plurality of bytes. In an integrated circuit card ICC, the bytecodes are stored in a file called cap file.
- a native function is written in the C language.

These non-limitative examples will be taken in the following description.

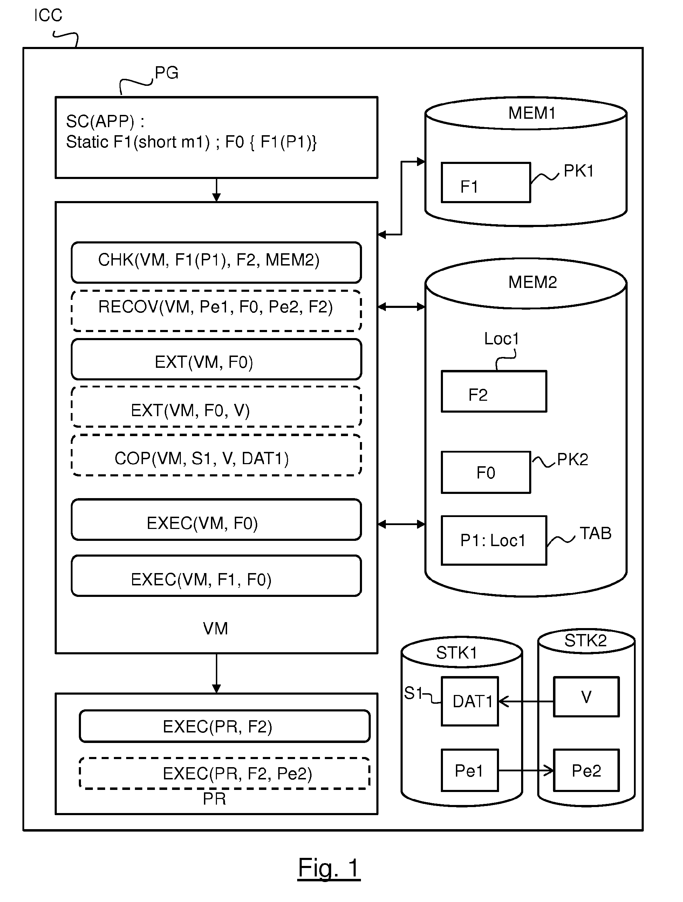

The integrated circuit card ICC which carries out the optimization method MTH is described in the following with reference to Fig. 1.
In the description, the integrated circuit card ICC is also called ICC card.
In a non-limitative embodiment, the integrated circuit card ICC is a smart card.
In a non-limitative example, the smart card is a banking card, such as an EMV card.

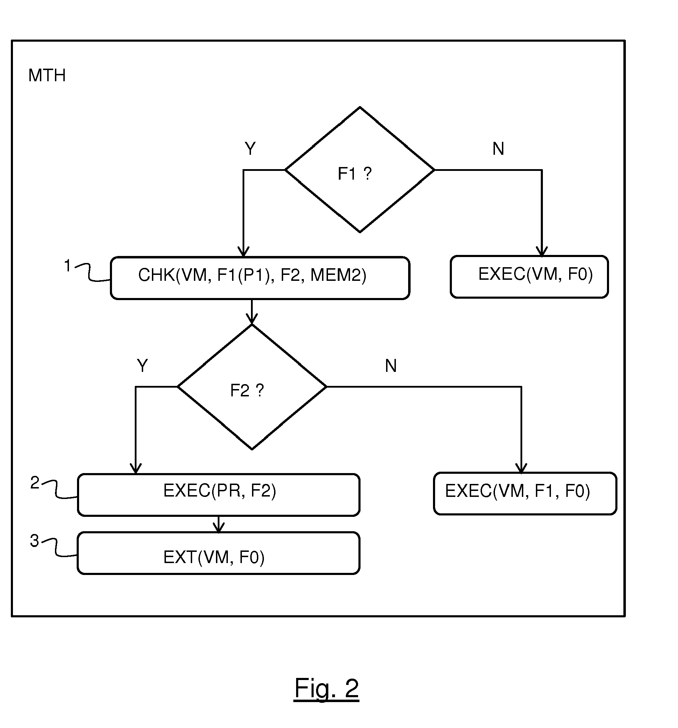

As illustrated in Fig. 2, the ICC card comprises:
- a virtual machine VM;
- a unit processor PR. A unit processor PR comprises one or a plurality of processors.
- a first non-volatile memory MEM1;
- a second rewritable non-volatile memory MEM2.

In a non-limitative embodiment, the first memory MEM1 is different from the second memory MEM2. In a non-limitative example, the first non-volatile memory MEM1 is a ROM ("Read Only Memory"), and the second rewritable non-volatile memory MEM2 is a memory such as an EEPROM ("Electrically-Erasable Programmable Read-Only Memory »), a FLASH memory, etc.

The ICC card comprises a source code SC written in JavaCard™. This source code refers to an application APP of a payment transaction in a non-limitative example. The bytecodes corresponding to the source code SC are stored in the second memory MEM2.

The source code SC comprises one or a plurality of platform-independent methods which refer to the different operations necessary to set-up the payment transaction between the ICC card and a payment terminal in a contact or contactless way in a non-limitative example.

Some of the platform-independent methods which are critical, especially in terms of time in the case of a payment application, have to be optimized. Said methods are called first platform-independent methods F0. Hence, for each operation or group of operations which is to be optimized, the source code SC comprises a first platform-independent method F0. Hence, the ICC card comprises at least one first platform-independent method F0 to be optimized. A first platform-independent method F0, which is written in JavaCard™ in the non-limitative example given, comprises a call (also called an invocation) to a specific second platform-independent method F1, said specific second platform-independent method F1 comprising one specific parameter P1. Said specific second platform-independent method F1 is written in JavaCard™ and is stored in said first non-volatile memory MEM1. It is to be noted that this specific second platform-independent method F1 is named by the party which develops the optimization method. Usually, it will be an ICC card issuer.

Therefore, the integrated circuit card ICC comprises:
- a first package PK1 including said specific second platform-independent method F1, said first package being stored in said first memory MEM1;
- a second package PK2 including at least one first platform-independent method F0, said second package being stored in said second memory MEM2.

It is to be reminded that a package permits to group platform-independent methods together, which are all related. In the example taken, the methods all have to do with the payment transaction.

Moreover, packages may be stored in compressed files (called cap files in the example of JavaCard™ packages), allowing to download faster the methods as a group rather than one at a time.

The second package PK2 comprises the source code SC related to the application APP, said source code SC comprising the at least one first platform-independent method F0.

The specific second platform-independent method F1 is declared as a static method in said source code SC, said static method having at least one input parameter m1. In a non-limitative example, the input parameter m1 is a short integer. As described later in the following, in a non-limitative embodiment, the source code SC comprises a plurality of static methods corresponding to said specific second platform-independent method F1 according to the return type of said first platform-independent method F0.

The static declaration permits the second platform-independent method F1 to be available for all the first platform-independent methods F0 invoking said second platform-independent method F1 without having any creation of an instance of said second platform-independent method F1 at each invocation. The time execution of a first platform-independent method F0 calling said second platform-independent method F1 is therefore improved. There is no need for each first platform-independent method F0 to have a specific reference to said second platform-independent method F1.

In a non-limitative embodiment, the second memory MEM2 also comprises at least one table TAB, said table TAB comprising at least one specific parameter P1 and an associated memory location Loc1 in said second memory MEM2 where a native function F2 corresponding to said first platform-independent method F0 is stored.

Said native function F2 is written in the C language in the non-limitative example given, and comprises instructions which are arranged so as to optimize the corresponding first platform-independent method F0 of the application APP.

It is to be noted that this at least one table TAB is defined by the party which develops the optimized native functions F2. Said table TAB is loaded in the second memory MEM2 at the same time than the native function(s) F2.
Said party will usually be an ICC card issuer.

It is to be noted that the second package PK2 including the first platform-independent method F0 is loaded by a party which will usually be the authority which will dispatch the ICC card to the end-user, such as a bank in a non-limitative example. Therefore the second package PK2 is usually loaded in the second memory MEM2 not at the same moment than the native function F2.

As will be described, the virtual machine VM will call the native function F2 instead of some or all the virtual machine instructions of the first platform-independent method F0, so that said native function F2 will be executed and the operations of said first platform-independent method F0 optimized.

Said optimization method MTH is illustrated in Fig. 2 in a non-limitative embodiment. In the embodiment illustrated, the first platform-independent method F0 returns no data and has no input parameters.

The different steps are described in detailed hereinafter.

It is to be noted that after the source code SC comprising the first platform-independent method F0 has been compiled, the virtual machine instructions are generated and the corresponding cap file is loaded in the second memory MEM2. Then, the virtual machine VM executes the bytecodes of said first platform-independent method F0 as following.

The virtual machine VM which is dedicated to take into account the specific second platform-independent method F1, that is to say which is aware that there is an optimization native function F2 corresponding to the first platform-independent method F0 to be run instead of the virtual machine instructions of said first platform-independent method F0, will perform the first step 1) at runtime (during the execution of the first platform-independent method F0) described hereinafter.

If the virtual machine VM is not aware that there is an optimization native function F2 to be run instead of the virtual machine instructions of the first platform-independent method F0, it will run the second platform-independent method F1 which is declared as static. As this static method have no instructions in its body, it will execute nothing for the second platform-independent method F1 and go on executing the virtual machine instructions of the first platform-independent method F0.

It is to be noted that the call to the specific second platform-independent method F1 is performed in the first platform-independent method F0 before any operations of said first platform-independent method F0 which are to be optimized, so that the dedicated virtual machine VM will look for and run the corresponding native function F2 instead of said operations. Of course, the virtual machine VM executes as usual in said first platform-independent method F0 the operations written before the call the second platform-independent method F1.

It is to be noted that if there is no call to a specific second platform-independent method F1 (first branch N illustrated in Fig. 2), the virtual machine VM runs the virtual machine instructions of said first platform-independent method F0 (illustrated EXEC(VM, FO)), that is to say, in the example of the java virtual machine, it executes the JavaCard™ implementation which is slower to be executed.

**In a first step 1),** if there is a call to the specific second platform-independent method F1 within said first platform-independent method F0, said specific second platform-independent method F1 comprising one specific parameter P1 and being stored in the first non-volatile memory MEM1, the virtual machine VM checks according to said specific parameter P1 if there is a native function F2 associated to said first platform-independent method F0, said native function F2 being stored in said second non-volatile memory MEM2 (illustrated CHK(VM, F1 (P1), F2, MEM2)).

The native function F2 is a faster implementation of some operations or of all the operations of the first platform-independent method F0 which is identified by the specific parameter P1. Said specific parameter P1 is in a non-limitative example a constant.

The specific parameter P1 acts as a reference to the native function F2 corresponding to the parts of the first platform-independent method F0 which are optimized. Said reference refers in the non-limitative example to an address location in the second memory MEM2 of the corresponding native function F2.

In a non-limitative embodiment, the virtual machine VM uses the table TAB to locate in the ICC card the native function F2 corresponding to the first platform-independent method F0.

The table TAB comprises as many values of the specific parameters P1, as there are native functions F2 corresponding to different first platform-independent methods F0 to be optimized.

According to the value of a specific parameter P1, in order to find the right native function F2, the virtual machine VM checks within the table TAB which is the corresponding location Loc1 within said second non-volatile memory MEM2.

Then, it will look at the right address location Loc1 to retrieve the right native function F2 corresponding to the first platform-independent method F0 which is currently executed. Said native function F2 comprises instructions which will perform the operations of said first platform-independent method F0 in an optimized form.

It is to be noted that for each application APP, there will be an associated table TAB, as according to an application APP, there will be different first platform-independent methods F0, and according to an application APP, different first platform-independent methods F0 are to be optimized.

Therefore, the second non-volatile memory MEM2 comprises one or a plurality of tables TAB, each associated to one source code C corresponding to an application APP.

Therefore a parameter P1 may have the same value in different tables TAB, but the same value may refer to different native functions F2.

It is to be noted that if there is no native function F2 which is associated to the first platform-independent method F0, it means that there is no native function F2 in the second memory MEM2 which corresponds to the value of the specific parameter P1. It means that there is no value in the table TAB corresponding to the value of the parameter P1.

In this case (second branch N illustrated), the virtual machine VM executes (illustrated EXEC(VM, F1, F0)) the JavaCard™ implementation which is slower to be executed, that is to say, it executes:
- the specific second platform-independent method F1 which is declared as a static method with no operations in its body; and
- the operations of said first platform-independent method F0 following the call to said specific second platform-independent method F1.

**In a second step 2),** the unit processor PR executes said native function F2 (illustrated EXEC(PR, F2)).

The native function F2, which is written in C in the non-limitative example, is executed. It includes instructions which permit to optimize some or all the operations of said first platform-independent method F0.

**In a third step 3),** said virtual machine VM exits directly from said first platform-independent method F0 upon completion of said native function F2 (illustrated EXT(VM, F0)).

After the execution of the native function F2, there is a direct exit from said first platform-independent method F0 so that the virtual machine instructions which are written after the call of the specific second platform-independent method F1 are not executed.

It avoids executing twice the instructions related to the same operations of the application APP, the faster ones and the slower ones.

It avoids the implementation of said first platform-independent method F0, which is slower, to be executed (the JavaCard™ one in the non-limitative example given).

Hence, a developed source code SC including a call to said specific second platform-independent function F1 remains interoperable and will run normally on any integrated circuit card ICC. Indeed, said source code SC invokes no native methods. However, when loaded on an integrated circuit card ICC supporting a proprietary virtual machine VM which is adapted to perform the optimization method MTH, critical parts of the processing of the source code SC will be executed directly in native, and will therefore be performed faster.

Thanks to the optimization method described (and in particular thanks to the reference P1 in the second platform-independent method F1), there is no need to have a proprietary first package PK1 in said first memory MEM1 comprising specific native methods which are developed to optimize the application APP. In this case, the application APP is not interoperable as there must be in all the different ICC cards delivered by different issuers said first package PK1 comprising said specific native methods, or even comprising the whole application, which hinders the ability to customize, and therefore to optimize, some parts of, or all the application APP, after the product comprising said ICC card is issued.

In the first non-limitative embodiment described in Fig. 2, the first platform-independent method F0 returns no data. In this case, in a non-limitative embodiment, the static method defined in the source code SC (corresponding to the second platform-independent method F1) is a static void method.

In a second non-limitative embodiment, when the first platform-independent method F0 returns first data DAT1, the native function F2 returns the same first data DAT1.

According to a first non-limitative variant, the return type of the first data DAT1 of said first platform-independent method F0 is coded in the most significant bits (two bits) of the specific parameter P1 of the second platform-independent method F1.

Hence, it permits the native function F2 to be aware of the space occupied by said first data DAT1. For example, 16 bits may be allocated in the native stack STK2 described later (and in the stack STK1 described later) for a boolean, byte, or short return type, and 32 bits may be allocated in the native stack STK2 (and in the stack STK1) for an int or object return type.

According to a second non-limitative variant, the specific second platform-independent method F1 comprises a second specific parameter P1' for indicating the return type of said first data DAT1.
In a non-limitative example, said second specific parameter P1' is a short integer.

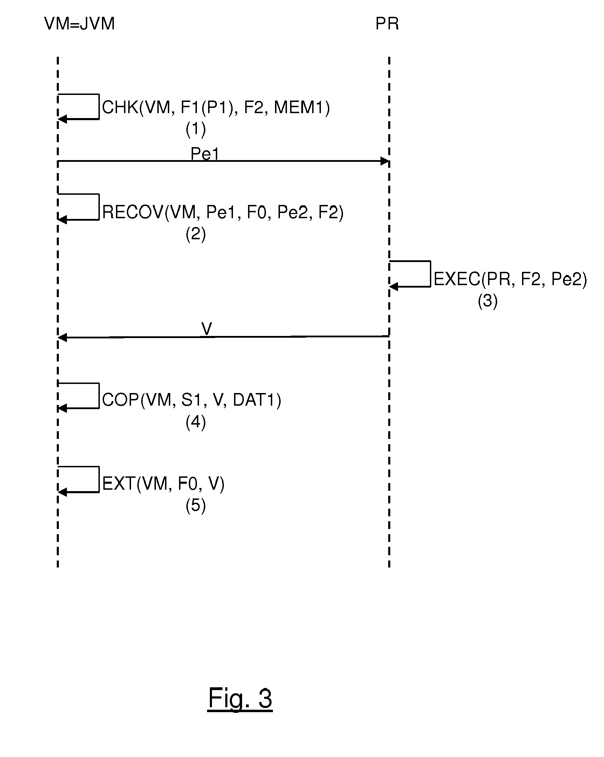

For these two non-limitative variants, when the first platform-independent method F0 returns first data DAT1, the optimization method MTH further comprises:
- copying by means of said virtual machine VM a value V of the first data DAT1 computed by said native function F2 in a memory space S1 allocated for said first data DAT1 (illustrated in dashed line in Fig. 3 COP(VM, S1, V, DAT1));
- exiting directly by means of said virtual machine VM from said first platform-independent method F0 by returning said value V upon completion of said native function F2 (illustrated in dashed line in Fig. 3 EXT(VM, F0, V)).

When a stack architecture is used, as illustrated, the memory space S1 allocated for said first data DAT1 is the frame FR0 of said first platform-independent method F0. When executing the native function F2, the value V computed by the native function F2 is saved in the frame FR1 associated to the second platform-independent method F1. Then, the virtual machine VM retrieves said value V from the frame FR1 and copies it into the frame FR0.

According to a third non-limitative variant, there is a plurality of definitions of said specific second platform-independent method F1 as a static method in a source code SC using said first platform-independent method F0, said plurality of static methods having at least one input parameter m1.

Hence, for each different type of the first data DAT1 to be returned, there is a specific corresponding static method.

Hence, in non-limitative examples, the following static methods defined are:
static boolean F1 (short m1) for a boolean return type;
static byte F1 (short m1) for a byte return type;
static short F1 (short m1) for a short return type;
static int F1 (short m1) for an int return type;
static Object F1 (short m1) for an Object return type.

In this third variant, there is no need to copy the value V computed by the native function F2 in a memory space S1 allocated for said first data DAT1.

Indeed, in this embodiment, as the return type of the second platform-independent method F1 is the same as the return type of the first platform-independent method F0, the value V is directly copied by mans of said virtual machine VM in the frame FR0 associated with the first platform-independent method F0.

Fig. 3 illustrates the optimization method MTH with the copy of the value V of the first data DAT1 computed by the native function F2 in the memory space S1.

Moreover, in the embodiment illustrated, the first platform-independent method F0 returns first data DAT1 and has one input parameter Pe1.

In the following example, the first platform-independent method F0 returns a short integer. The value V computed is a short integer.

The **step 1)** is the same as the checking step described before for the Fig. 2.

If there is a corresponding native function F2, **in a second step 2),** the virtual machine VM recovers said at least one input parameter Pe1 of said first platform-independent method F0 for use as an input parameter Pe2 for said native function F2 (illustrated RECOV(VM, Pe1, F0, Pe2, F2)).

As the native function F2 will be run instead of the virtual machine instructions of the first platform-independent method F0 which followed the call of the specific second platform-independent method F1, it needs to be run with the input parameters Pe1 of the first platform-independent method F0. Therefore, the virtual machine VM makes all the parameters Pe1 of the first platform-independent method F0 available for the native function F2.

For some virtual machines such as the Java™ Virtual Machine JVM, the virtual machine is based on a stack architecture. A stack STK1 is used for the execution of the first platform-independent method F0. The stack STK1 is divided in a plurality of frames FR. Each time a function is called, a new frame FR is created. Hence, a first frame FR0 is created for the first platform-independent method F0 and a second frame is created for the second platform-independent method F1. Each time a method returns, the frame FR of that method invocation is suppressed.

A stack's frame stores the data of the associated method: its local variables, the parameters with which it was invoked, its return value (if any), and the address at which the function is executing.
For the native function F2, another stack STK2 which is used for the native language, (which will be called native stack in the following), is used.

Hence, for the recovering, in a non-limitative example, the virtual machine VM will recover the input parameter(s) Pe1 from the frame FR0 related to the first platform-independent method F0 being run and will push them on the stack STK2 related to the native function F2. The parameter(s) Pe1 will be used as input parameter(s) Pe2 for said native function F2.

As the virtual machine VM manages all the different stacks and frames FR, it knows exactly where to find the input parameter(s) Pe1 and where to push them.

In a non-limitative example, this recovery of parameters is performed via a recovery function provided by the virtual machine VM which is written in the C language and which is called by the native function F2.
In another non limitative example, the recovery of parameters is a set of instructions written in the C language and included in the native function F2 itself.

When it has found the associated native function F2 corresponding to the current first platform-independent method F0, the virtual machine VM informs the unit processor PR which native function F2 it has to execute.

In **step 3),** the unit processor PR executes said native function F2 (illustrated EXEC(PR, F2, Pe2)) with the parameters Pe2.

The native function F2, which is written in C in the non-limitative example, is executed. It includes instructions which permit to optimize some or all the operations of said first platform-independent method F0.

**Hence, in a fourth step 4),** the virtual machine VM copies the value V computed by the native function F2 in the memory space S1 allocated for said first data DAT1. Said memory space S1 belongs to the virtual machine stack STK1 which is associated to the current first platform-independent method F0.

**In a fifth step 5),** the virtual machine VM exits directly from said first platform-independent method F0 by returning said value V upon completion of said native function F2 (illustrated EXT(VM, F0, V)).

Hence, when the native function F2 has been executed, the virtual machine VM exits directly from the caller of the specific second platform-independent method F1, here from said first platform-independent method F0, without executing the remaining operations of said first platform-independent method F0 which are written after the call to the second platform-independent method F1. The virtual machine returns the short integer V which has been computed by the native function F2.

It avoids executing twice the instructions related to the same operations of the application APP, the faster ones and the slower ones.

Hence, as described before, the optimization method MTH is carried out by an integrated circuit card ICC (illustrated in Fig. 1) comprising a virtual machine VM and a unit processor PR, a first non-volatile memory MEM1 and a second rewritable non-volatile memory MEM2, said integrated circuit card ICC being adapted to optimize the execution of a first platform-independent method F0 by means of said virtual machine VM, said first platform-independent method F0 being stored in said second rewritable non-volatile memory MEM2.

Said virtual machine VM is adapted to:
- if there is a call to a specific second platform-independent method F1 within said first platform-independent method F0, said specific second platform-independent method F1 comprising one specific parameter P1 and being stored in the first non-volatile memory MEM1:
- check according to said specific parameter P1 if there is a native function F2 associated to said first platform-independent method F0 stored in said second rewritable non-volatile memory MEM2 (illustrated CHK(VM, F1(P1), F2, MEM2)).

Said unit processor PR is adapted to execute said native function F2 (illustrated EXEC(PR, F2)).

Said virtual machine VM is further adapted to:
- exit directly from said first platform-independent method F0 upon completion of said native function F2 (illustrated EXT(VM, F0)).

In a non-limitative embodiment, the first platform-independent method F0 comprises at least one input parameter Pe1 and said virtual machine VM is further adapted to:
- if there is a corresponding native function F2, recover said at least one input parameter Pe1 of said first platform-independent method F0 for use as an input parameter Pe2 for said native function F2 (illustrated in dotted lines RECOV(VM, Pe1, F0, Pe2, F2)).

In a non-limitative embodiment, the first platform-independent method F0 returns first data DAT1 and the native function F2 returns the same first data DAT1.

In a non-limitative embodiment, said virtual machine VM is further adapted to:
- copy a value V of the first data DAT1 computed by said native function F2 in a memory space S1 allocated for said first data DAT1 (illustrated COP(VM, S1, V, DAT1));
- exit directly from said first platform-independent method F0 by returning said value V upon completion of said native function F2 (illustrated in dotted lines EXT(VM, F0, V)).

In a non-limitative embodiment, said unit processor PR is adapted to execute said native function F2 with the input parameters Pe2 (illustrated in dotted lines EXEC(PR, F2, Pe2)).

It is to be understood that the present invention is not limited to the aforementioned embodiments and variations and modifications may be made without departing from the scope of the invention. In the respect, the following remarks are made.

Hence, the application APP may be any other application than a payment transaction, and in other non-limitative embodiments, the smart card is an Electronic Identity Card, a health card, a driving license, a passport, a privacy card, a financial service card, an access card etc.

Hence, the optimization is about the time execution in the non-limitative example of the payment transaction. Of course, in other embodiments, the optimization may concern a stack optimization or other kind of optimization. Hence, virtual machines which are based on register architecture instead of stack architecture may be used.

Hence, other virtual machine such as the CLI virtual machine (Common Intermediate Language) may be used.

The embodiments are also intended to cover computers programmed to perform said steps of the above-described method.

One or a plurality of computer program products PG as illustrated in Fig. 1 can be contained in the ICC card. A computer program product PG comprises a set of instructions. Thus, said set of instructions contained, for example, in an ICC card memory, may cause the ICC card (an more particularly here the virtual machine VM) to carry out the different steps of the optimization method MTH.

Hence, some embodiments of the invention may comprise one or a plurality of the following advantages:
- it is easy to implement;
- it permits to bring a competitive advantage in term of performance, while keeping an application interoperable;
- it permits to test the performance of an application and to verify the operations which need to be optimized after the product comprising the ICC card is issued. Hence, it permits to customize and to install optimized applications post-issuance;
- there is no need to specify generic optimization native methods in advance in the first memory MEM1 which would be a difficult task to achieve as one can't be sure before issuance of the product where does the weakness of an application reside in term of performance;
- an application APP is not modified from an ICC card to another ICC card delivered by different issuers. Only one or a plurality native function(s) are added (and a corresponding reference P1) according to the specific ICC card issuer's who is aware of the possibility to optimize the ICC card post-issuance;
- there is no need to deploy native methods all over different platforms to enable an application to run on these platforms, as there is no direct invocation of native method in the first platform-independent method.

## Claims

1. An optimization method (MTH) for optimizing the execution of a first platform-independent method (F0) by means of a virtual machine (VM) of an integrated circuit card (ICC), wherein said integrated circuit card (ICC) comprising a first non-volatile memory (MEM1), a second rewritable non-volatile memory (MEM2) and a unit processor (PR), said first platform-independent method (F0) being stored in said second rewritable non-volatile memory (MEM2), and wherein said optimization method (MTH) comprising:
- if there is a call to a specific second platform-independent method (F1) within said first platform-independent method (F0), said specific second platform-independent method (F1) comprising one specific parameter (P1) and being stored in the first non-volatile memory (MEM1), checking by means of said virtual machine (VM) according to said specific parameter (P1) if there is a native function (F2) associated to said first platform-independent method (F0) stored in said second rewritable non-volatile memory (MEM2);
- if there is a corresponding native function (F2):
- executing by means of said unit processor (PR) said native function (F2);
- exiting by means of said virtual machine (VM) directly from said first platform-independent method (F0) upon completion of said native function (F2).

2. Optimization method (MTH) according to claim 1, wherein said first platform-independent method (F0) comprises at least one input parameter (Pe1) and said optimization method (MTH) further comprises:
- if there is a corresponding native function (F2):
- recovering by means of said virtual machine (VM) said at least one input parameter (Pe1) of said first platform-independent method (F0) for use as an input parameter (Pe2) for said native function (F2).

3. Optimization method (MTH) according to claim 1 or claim 2, wherein it further comprises the definition of said specific second platform-independent method (F1) as a static method in a source code (SC) using said first platform-independent method (F0), said static method having at least one input parameter (m1).

4. Optimization method (MTH) according to any one of the previous claim 1 to 3, wherein said first platform-independent method (F0) returns first data (DAT1) and said native function (F2) returns the same first data (DAT1).

5. Optimization method (MTH) according to claim 4, wherein said specific second platform-independent method (F1) comprises a second specific parameter (P1') for indicating the return type of said first return data (DAT1).

6. Optimization method (MTH) according to claim 4 or 5, wherein said optimization method (MTH) further comprises:
- copying by means of said virtual machine (VM) a value (V) of the first data (DAT1) computed by said native function (F2) in a memory space (S1) allocated for said first data (DAT1);
- exiting by means of said virtual machine (VM) directly from said first platform-independent method (F0) by returning said value (V) upon completion of said native function (F2).

7. Optimization method (MTH) according to claim 4, wherein a source code (SC) using said first platform-independent method (F0) comprises a plurality of static methods corresponding to said specific second platform-independent method (F1) according to the return type of said first data (DAT1).

8. Optimization method (MTH) according to any one of the previous claim 1 to 7, wherein if there is no native function (F2) associated to said first platform-independent method (F0), the optimization method (MTH) further comprises:
- executing the specific second platform-independent method (F1); and
- executing the operations of said first platform-independent method (F0) following the call to said specific second platform-independent method (F1).

9. Optimization method (MTH) according to any one of the previous claim 1 to 8, wherein said first platform-independent method (F0) is in the form of bytecodes when executed by said virtual machine (VM).

10. Optimization method (MTH) according to any one of the previous claim 1 to 9, wherein said virtual machine (VM) is a Java™ virtual machine (JVM).

11. Optimization method (MTH) according to any one of the previous claim 1 to 10, wherein said second non-volatile memory (MEM2) comprises at least one table (TAB), said at least one table (TAB) comprising at least one specific parameter (P1) and an associated memory location (Loc1) in said second rewritable non-volatile memory (MEM2) where said native function (F2) corresponding to said first platform-independent method (F0) is stored.

12. Optimization method (MTH) according to any one of the previous claim 1 to 11, wherein said integrated circuit card (ICC) is a smart card.

13. Optimization method (MTH) according to any one of the previous claim 1 to 12, wherein said second rewritable non-volatile memory (MEM2) is different from said first non-volatile memory (MEM1).

14. Integrated circuit card (ICC) comprising a virtual machine (VM) and a unit processor (PR), a first non-volatile memory (MEM1) and a second rewritable non-volatile memory (MEM2), said integrated circuit card (ICC) being adapted to optimize the execution of a first platform-independent method (F0) by means of said virtual machine (VM), said first platform-independent method (F0) being stored in said second rewritable non-volatile memory (MEM2), said virtual machine (VM) being adapted to:
- if there is a call to a specific second platform-independent method (F1) within said first platform-independent method (F0), said specific second platform-independent method (F1) comprising one specific parameter (P1) and being stored in the first non-volatile memory (MEM1), check according to said specific parameter (P1) if there is a native function (F2) associated to said first platform-independent method (F0) stored in said second rewritable non-volatile memory (MEM2);
- if there is a corresponding native function (F2),
- said unit processor (PR) being adapted to:
- execute said native function (F2);
- said virtual machine (VM) being further adapted to:
- exit directly from said first method (F0) upon completion of said native function (F2).

15. Integrated circuit card (ICC) according to claim 14, wherein said first non-volatile memory (MEM1) comprises a first package (PK1) comprising said specific second platform-independent method (F1), and said second rewritable non-volatile memory (MEM2) comprises a second package (PK2) comprising said first platform-independent method (F0).
